# EUROPEAN PATENT APPLICATION

(11) **EP 4 807 520 A1**
(43) Date of publication of application: **16.09.2026**
(21) Application number: 26163445.5
(22) Date of filing: 10.03.2026
(51) Int. Cl.: G06F 3/12

(54) **IMAGE FORMING APPARATUS AND CONTROL METHOD FOR IMAGE FORMING APPARATUS**

(30) Priority: 12.03.2025 JP 2025039757
(71) Applicant: Sharp Kabushiki Kaisha, Sakai City, Osaka 590-8522 (JP)
(72) Inventor: MATSUDA, Chikara, Osaka, 590-8522 (JP)
(74) Representative: Müller Hoffmann & Partner

(57) **Abstract**

An image forming apparatus (10) includes one or more controllers (11) and a storage (23) that is a storage destination of print data. The one or more controllers (11) store the print data in a first folder when user information added to the print data satisfies a condition for storage in the first folder identified by an identifier including the user information, and store the print data in a second folder different from the first folder when the user information does not satisfy the condition for storage in the first folder.

## Description

### CROSS-REFERENCE TO RELATED APPLICATION

The present application claims priority from Japanese Application JP2025-039757, the content of which is hereby incorporated by reference into this application.

### BACKGROUND OF THE INVENTION

### 1. Field of the Invention

The disclosure relates to an image forming apparatus and a control method for an image forming apparatus.

### 2. Description of the Related Art

Some image forming apparatuses such as multifunction peripherals have a function of storing print data received as a print job in a storage device such as a storage (hereinafter, may be referred to as a hold function), and the stored print data can be printed when necessary via an operation panel of the image forming apparatus without using an information processing device such as a personal computer (PC). In an aspect of the disclosure, a mode of recording or temporarily holding information such as print data in a storage device may be referred to as "storing".

For example, Japanese Patent Application Laid-Open No. 254618-2012 discloses an image forming apparatus that automatically generates a user folder based on a user name or the like included in bibliographic information of print data received from a PC, and stores the received print data in the generated folder.

### SUMMARY OF THE INVENTION

An object of one aspect of the disclosure is to provide an image forming apparatus or the like capable of improving usability for a user regarding a function of storing print data in a storage.

An image forming apparatus according to one aspect of the disclosure for achieving the object described above includes: one or more controllers; and a storage that is a storage destination of print data, wherein the one or more controllers store the print data in a first folder when user information added to the print data satisfies a condition for storage in the first folder identified by an identifier including the user information, and store the print data in a second folder different from the first folder when the user information does not satisfy the condition for storage in the first folder.

A control method according to one aspect of the disclosure is a control method for an image forming apparatus including one or more controllers, and a storage that stores print data, the control method including: storing the print data in a first folder when user information added to the print data satisfies a condition for storage in the first folder identified by an identifier including the user information; and storing the print data in a second folder different from the first folder when the user information does not satisfy the condition for storage in the first folder.

One aspect of the disclosure can provide an image forming apparatus or the like capable of improving usability for a user regarding a function of storing print data in a storage.

### BRIEF DESCRIPTION OF THE DRAWINGS

FIG. 1 is a diagram illustrating a mode of connection between a multifunction peripheral and a PC according to a first embodiment.
FIG. 2 is a perspective view illustrating an overall configuration of a multifunction peripheral according to the first embodiment.
FIG. 3 is a diagram illustrating a functional configuration of the multifunction peripheral according to the first embodiment.
FIG. 4 is a diagram illustrating a data configuration of a print job.
FIG. 5 is a flowchart for explaining a flow of processing according to the first embodiment.
FIG. 6 is a flowchart for explaining a flow of processing according to the first embodiment.
FIG. 7 is a flowchart for explaining a flow of processing according to the first embodiment.
FIG. 8 is a diagram illustrating an example of an operation according to the first embodiment.
FIG. 9 is a diagram illustrating an example of an operation according to the first embodiment.
FIG. 10 is a diagram illustrating an example of an operation according to the first embodiment.
FIG. 11 is a diagram illustrating an example of an operation according to the first embodiment.
FIG. 12 is a diagram illustrating an example of an operation according to the first embodiment.
FIG. 13 is a diagram illustrating an example of an operation according to the first embodiment.
FIG. 14 is a diagram illustrating an example of an operation according to the first embodiment.
FIG. 15 is a diagram illustrating an example of an operation according to the first embodiment.
FIG. 16 is a diagram illustrating an example of an operation according to the first embodiment.
FIG. 17 is a diagram illustrating an example of an operation according to the first embodiment.
FIG. 18 is a diagram illustrating a functional configuration of the multifunction peripheral according to a second embodiment.
FIG. 19 is a flowchart for explaining a flow of processing according to the second embodiment.

### DETAILED DESCRIPTION OF THE INVENTION

Hereinafter, embodiments of the disclosure will be described with reference to the drawings. The embodiments to be described below are merely examples for describing the disclosure, and the technical contents described in the claims are not limited to the following descriptions.

When a function of storing print data in a storage is active, print data owned by a user is stored in a folder (hereinafter, may be referred to as a user folder) created based on user information. Thus, usability of a hold function for the user can be further improved.

However, there may have been a case where when the user information for generating a user folder is insufficient, the image forming apparatus cannot generate the user folder, cannot determine a storage destination of received print data, and the print data is deleted from the image forming apparatus since the print data has nowhere to go. As a result, the usability for the user is compromised.

The disclosure realizes an image forming apparatus and the like capable of improving usability for a user regarding a hold function as a function of storing print data in a storage in the following embodiments.

### 1 First Embodiment

A first embodiment relates to a mode of an image forming apparatus according to the disclosure applied to a multifunction peripheral. The multifunction peripheral is an image forming apparatus that can realize, within a single housing, jobs related to copying, scanning, facsimile, e-mail sending, and the like and can print on a medium such as a sheet, an image (a color image or a monochrome image) based on print data received as a print job, for example.

### 1.1 Overall Configuration

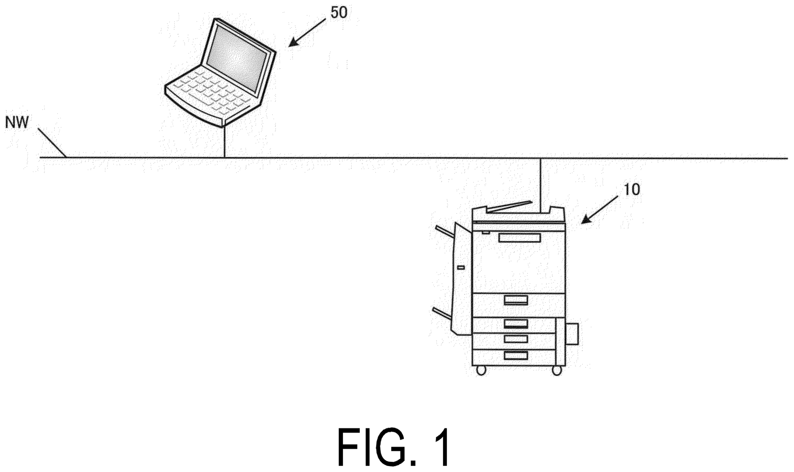

FIG. 1 is a diagram illustrating an example of a mode of connection between a multifunction peripheral 10 and a PC 50 as an information processing device. The multifunction peripheral 10 and the PC 50 are formed to be capable of communicating with each other via a network NW. The multifunction peripheral 10 is an image forming apparatus capable of receiving print data transmitted as a print job from the PC 50 and printing an image based on the print data on a medium such as sheet.

### 1.2 Functional Configuration of Multifunction Peripheral 10

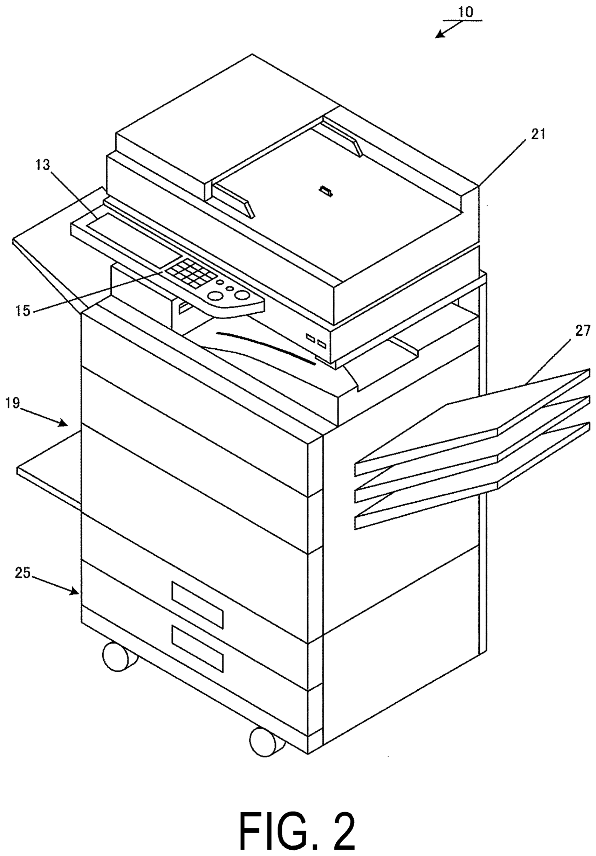

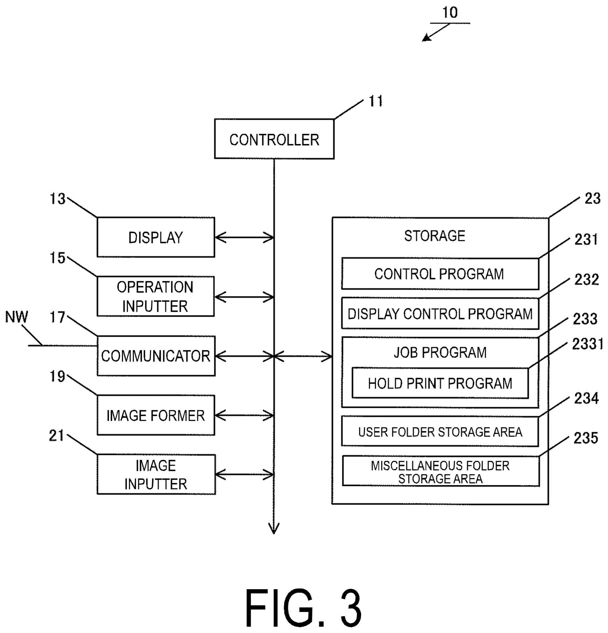

FIG. 2 is a perspective view illustrating an overall configuration of the multifunction peripheral 10 according to the first embodiment. FIG. 3 is a functional configuration diagram of the multifunction peripheral 10.

The multifunction peripheral 10 includes a controller 11, a display 13, an operation inputter 15, a communicator 17, an image former 19, an image inputter 21, and a storage 23.

The controller 11 performs comprehensive control of the multifunction peripheral 10. The controller 11 can be implemented using one or more arithmetic devices (such as a central processing unit (CPU) or a digital signal processor (DSP)). By reading and executing various programs stored in the storage 23, the controller 11 realizes various functions provided by the multifunction peripheral 10. The controller 11 may also be implemented as a System on a Chip (SoC) having multiple functions among functions to be described below. Note that the controller 11 may be formed of one or more control circuits.

The display 13 displays various types of information for a user or the like. The display 13 can be formed of, for example, a Liquid Crystal Display (LCD), an organic Electro-Luminescence (EL) display, a micro LED display, a mini-LED display, or the like.

The operation inputter 15 receives an operation instruction from the user or the like. The operation inputter 15 can be implemented, for example, using various input devices such as operation keys including hard keys or software keys, or buttons. Note that the operation inputter 15 can also be configured as a touch panel display that enables input via the display 13. In this case, as the input method of the touch panel display, a resistive film method, an infrared method, an electromagnetic induction method, a capacitive method, or the like can be employed, for example.

The communicator 17 includes a wired/wireless network communication interface for performing communication with another device such as the PC 50 via the network NW such as a local area network (LAN), a wide area network (WAN), the Internet, a telephone line, or a fax line, for example. Note that the wireless network communication interface may include an interface related to a short-range wireless communication interface such as Bluetooth (trade name), Wi-Fi (trade name), or IrDA, for example.

The image former 19 forms an image based on print data on a medium such as a sheet. The image former 19 feeds a sheet from a sheet feeder 25, forms an image based on the print data on the sheet, and then discharges the sheet to a sheet discharger 27. The image former 19 may be configured of, for example, a laser printer using an electrophotographic system or the like. In this case, the image former 19 performs image formation using toner supplied from a toner cartridge (not illustrated) corresponding to toner colors (for example, cyan, magenta, yellow, and black).

The image inputter 21 generates scan data by scanning and reading a document image to be read. The image inputter 21 can be configured as, for example, a scanner device including an image sensor such as a charge coupled device (CCD) or a contact image sensor (CIS). The configuration of the image inputter 21 is not particularly limited as long as the image inputter 21 can generate the scan data, including red, green, and blue (RGB) analog signals, by reading a reflected light image from a document image using the image sensor. Note that the image inputter 21 can also be formed as an interface capable of acquiring image data stored in a storage device such as a USB memory and having a file format such as TIFF, BMP, or JPEG, or image data transmitted from another device such as the PC 50, for example.

The storage 23 is one or more storage devices that store various programs and various types of data required for the operation of the multifunction peripheral 10. The storage 23 can include a storage device such as a random access memory (RAM), a solid state drive (SSD), a hard disk drive (HDD), and a read only memory (ROM), for example.

In the first embodiment, the storage 23 stores a control program 231, a display control program 232, and a job program 233, and secures a user folder storage area 234 and a miscellaneous folder storage area 235.

The control program 231 is a program that the controller 11 reads when performing comprehensive control of the multifunction peripheral 10. The controller 11 that has read the control program 231 controls driving of hardware such as the display 13, the operation inputter 15, the communicator 17, the image former 19, and the image inputter 21.

The display control program 232 is a program that the controller 11 reads when controlling an output of a screen displayed on the display 13 or the operation inputter 15 configured as a touch panel display. The controller 11 having read the display control program 232 controls displaying of an operation screen (such as, for example, a hold print screen described below or a home screen not illustrated) displayed on the display 13 (operation inputter 15).

The job program 233 is a program that the controller 11 reads when executing various jobs such as a print job, a copy job, a scan job, a fax job, and an e-mail sending job, for example. The controller 11 having read the job program 233 sets a device mode of the multifunction peripheral 10 to a job mode for executing each job, and executes a job for which an execution instruction is received.

The job program 233 according to the first embodiment includes a hold print program 2331. The controller 11 having read the hold print program 2331 stores the print data received as the print job in any one of a user folder as a first folder provided in the user folder storage area 234 and a miscellaneous folder as a second folder provided in the miscellaneous folder storage area 235, thereby holding the print data. Hereinafter, the hold function related to the printing of the print data will be referred to as a hold print function.

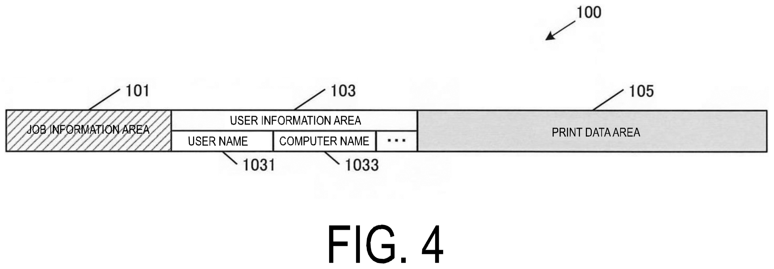

The controller 11 determines whether the user information added to the print data as the print job satisfies a condition for storage in the print data in a user folder identified by an identifier (hereinafter, may be simply referred to as a folder name) including the user information. Now, the user information according to the first embodiment will be described with reference to FIG. 4.

FIG. 4 is a diagram schematically illustrating an example of a data structure of a print job 100 transmitted from the PC 50 to the multifunction peripheral 10. In FIG. 4, an example in which the print job 100 includes a job information area 101, a user information area 103, and a print data area 105 will be described, but the data structure of the print job 100 is not limited to the example in FIG. 4.

The job information area 101 is an area for storing information necessary for the multifunction peripheral 10 to execute a job based on the print job 100. The job information area 101 can store, as print job information, for example, a job ID for uniquely identifying the print job 100, identification information such as a document name, connection information to the multifunction peripheral 10, print setting information such as the number of copies, the number of pages, a paper size, a page layout, color management, a font, and a finishing setting, date and time information regarding the execution date and time (transmission date and time) of the job, and the like.

The user information area 103 is a storage area for storing the user information. In the disclosure, a mode in which the user information stored in user information area 103 includes a user name 1031 and a computer name 1033 used by the user as predetermined information types will be described.

The user name 1031 indicates the name of a user who owns the print data. The computer name 1033 indicates the name of a computer used by the user identified by the user name or the name of a computer that has created the print job 100. In addition to the user name 1031 and the computer name 1033 indicating the ownership of the print data, the user information area 103 may include, for example, an e-mail address of the user, account information for a specific website, and login information for logging in to the multifunction peripheral 10, such as a login ID, a login name, a login password, login information, and a card number of an IC card.

The print data area 105 is an area for storing a main body part of the print data. The print data stored in the print data area 105 may be described in a page description language (PDL) that can be interpreted by the multifunction peripheral 10, and may be unique data provided by the manufacturer of the multifunction peripheral 10 or data described in a PDL such as PostScript, for example.

Incidentally, while an example in which the print job 100 includes the job information area 101, the user information area 103, and the print data area 105 is described in FIG. 4, the user information area 103 may be included in the job information area 101, or may be included in a header part or the like of the print data stored in the print data area 105. Further, the data to be transmitted to the multifunction peripheral 10 is not limited to the print job, and may be, for example, document data in a PDF format or the like, image data in a JPEG format or the like, or the like to which user information is added.

The controller 11 acquires (extracts) the user name 1031 and the computer name 1033 from the user information area 103 of the received print job 100. Upon determining that the acquired user information is sufficiently acquired, the controller 11 determines that the user information satisfies the condition for storage in the user folder, and stores the print data included in the print data area 105 in the user folder as the corresponding first folder. Even when it is determined that the user information is sufficiently acquired, it may be determined whether a user folder based on the acquired user information has been created (presence or absence) before the print data is stored in the user folder, and when the user folder has not been created (absent), a user folder based on the acquired user information may be created, and the print data may be stored in the created user folder.

On the other hand, upon determining that the acquired user information is insufficient, the controller 11 determines that the user information does not satisfy the condition for storage in the user folder, and stores the print data included in the print data area 105 in the miscellaneous folder as the second folder.

For the print data stored in any one of the user folder and the miscellaneous folder, for example, a hold function can be applied such as a print mode (hold mode without printing) in which the hold state is maintained without executing a sort processing or printing, a print mode (hold after printing) in which the hold state of the print data is maintained after printing the required number of copies, a print mode (sample print) in which only one copy is printed and the remaining copies are printed after checking the printed content when printing a plurality of copies, or a print mode (delete print data) in which the hold state of the print data is canceled after printing the required number of copies.

Referring back to FIG. 3, the user folder storage area 234 is a storage area for storing a user folder that is a storage destination of print data for each user. The miscellaneous folder storage area 235 is a storage area for storing a miscellaneous folder as a storage destination (save destination) for print data that does not satisfy the condition for storage in the user folder. The user folder storage area 234 and the miscellaneous folder storage area 235 may be provided in another external storage device (not illustrated) other than the storage 23.

### 1.3 Functional Configuration of PC 50

The PC 50 as the information processing device is not particularly limited in its configuration as long as it has a configuration (for example, a printer driver) capable of outputting the print job 100 including the print data to the multifunction peripheral 10, and an information processing device such as a PC, a smartphone, or a tablet generally distributed in the market can be used. Therefore, a detailed description of the PC 50 is omitted here.

### 1.4 Flow of Processing

### 1.4.1 Processing Related to Storage of Print Data

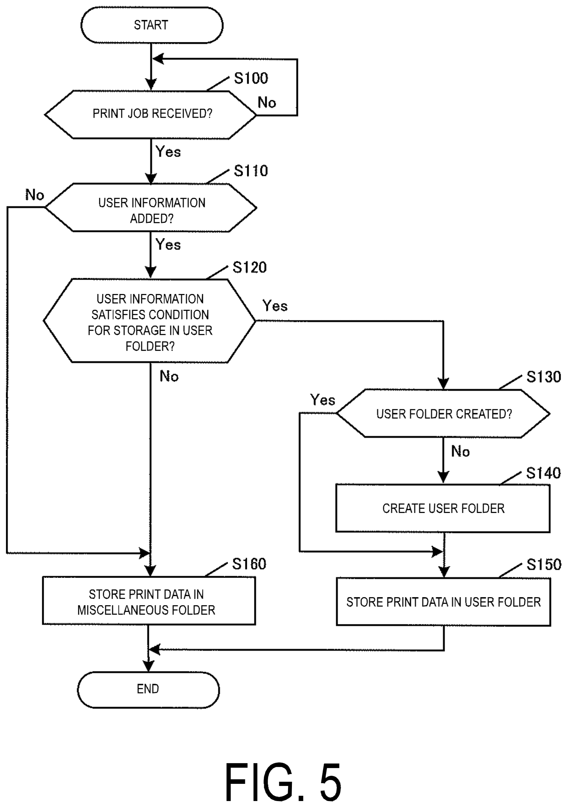

Next, a flow of processing according to the first embodiment will be described. FIG. 5 is a flowchart illustrating a flow of processing from reception of a print job to storage of print data in the user folder or the miscellaneous folder. Note that the processing described with reference to FIG. 5 will be described as processing executed by the controller 11 reading the control program 231, the job program 233 (hold print program 2331), and the like.

First, the controller 11 determines whether a print job is received from the PC 50 (step S100). Upon determining that the print job is received, the controller 11 checks whether the user information is added to the print data as the print job (step S100; Yes -> step S110). Upon determining that the print job is not received, the controller 11 waits until the print job is received (step S100; No).

Upon determining that the user information is added to the print data, the controller 11 determines whether the user information satisfies the condition for storage in the user folder (step S110; Yes -> step S120). At this time, upon determining that the user information is sufficiently acquired, the controller 11 determines that the user information satisfies the condition for storage in the user folder.

Here, the expression "user information is sufficiently acquired" in the disclosure means that the user name 1031 or both the user name 1031 and the computer name 1033 are added to the print data, and thus these names are acquired without fail. The condition for storage in the user folder can be set as appropriate by system setting or the like.

Upon determining that the user information satisfies the condition for storage in the user folder, the controller 11 determines whether the user folder corresponding to the user information has already been created and stored in the user folder storage area 234 (step S120; Yes -> step S130). For example, when the condition for storage in the user folder is a condition requiring both the user name 1031 and the computer name 1033, the controller 11 determines whether there is a user folder identified by a folder name including the user name 1031 and the computer name 1033.

Upon determining that the user folder corresponding to the user information has already been created, the controller 11 stores the print data in the user folder and ends the processing (step S130; Yes -> step S150).

On the other hand, upon determining that the user folder corresponding to the user information has not been created, the controller 11 automatically creates the user folder identified by the folder name including the user name 1031 and the computer name 1033 (step S130; No -> step S140). Next, the controller 11 stores the print data in the created user folder and ends the processing (step S130; No -> step S140 -> step S150).

In step S110, upon determining that the user information is not added to the print data (step S110; No), or determining that the user information does not satisfy the condition for storage in the user folder (step S120; No), the controller 11 determines that the user information to be stored in the user folder is insufficient, stores the print data in the miscellaneous folder, and ends the processing (step S160).

Here, "user information is insufficient" in the disclosure includes a case where the user information is not added to the print data in the first place (step S110; No), a case where only one of the user name 1031 and the computer name 1033 is included in the user information when the condition for storage in the user folder is a condition requiring both the user name 1031 and the computer name 1033, a case where only the user name 1031 is not included and only the computer name 1033 is included in the user information when the condition for storage in the user folder is a condition requiring only the user name 1031 (step S120; No), and the like for example.

### 1.4.2 Folder Display Processing in Hold Print Function

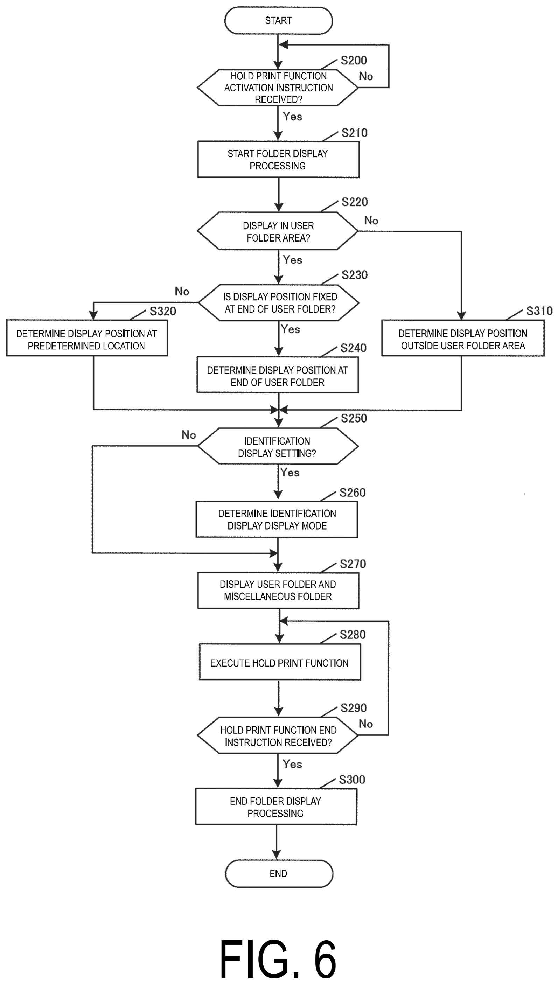

Next, folder display processing in the hold print function will be described with reference to a flowchart in FIG. 6. Note that the processing described with reference to FIG. 6 will be described as processing executed by the controller 11 receiving an instruction to start the hold print function and reading the control program 231, the display control program 232, the job program 233 (hold print program 2331), and the like.

The controller 11 determines whether an instruction to activate the hold print function is received via, for example, a setting screen for a print job (not illustrated), a home screen that is a basic screen for receiving an instruction to select each job, or the like (step S200). Upon determining that the instruction to activate the hold print function is received, the controller 11 reads the hold print program 2331 and starts the folder display processing (step S200; Yes -> step S210). Upon determining that the instruction to activate the hold print function is not received, the controller 11 waits until the instruction to activate is received (step S200; No).

When the folder display processing starts, the controller 11 determines whether the display position of the miscellaneous folder is set in the first display area that is the display area of the user folder (step S220). Here, the display area of the user folder as the first display area is formed as a substantially rectangular variable area in which the display position of the user folder to be displayed can be changed by sort processing or the like.

Upon determining that the display position of the miscellaneous folder is set within the first display area, the controller 11 determines whether the display position of the miscellaneous folder is fixed to the end position of the user folder (step S220; Yes -> step S230). Upon determining that the display position of the other folder is fixed to the end position of the user folder, the controller 11 determines the display position of the miscellaneous folder to be the end position of the user folder (step S230; Yes -> step S240).

Next, the controller 11 determines whether the identification display is set for the miscellaneous folder (step S250). The identification display for the miscellaneous folder is not particularly limited as long as it is a display mode enabling identification from the user folder, and for example, display control such as addition of a specific icon to the other folders or display of the miscellaneous folder in a display mode (display color, display font type, font size, shape and size of display frame (column), and the like) different from that of the user folder can be adopted.

Upon determining that the identification display is set for the miscellaneous folder, the controller 11 determines the display mode of the miscellaneous folder based on the set content (step S250; Yes -> step S260). Note that, when the identification display for the miscellaneous folder is not essential, the processing related to step S250 and step S260 may be omitted.

Then, the controller 11 displays each of the user folder and the miscellaneous folder (step S270).

The controller 11 receives a required operation instruction from the user for the hold print function, and executes processing related to the hold print function such as folder sort processing and folder selection processing (step S280). Then, the controller 11 determines whether an instruction to end the hold print function is received (step S290). Upon determining that the instruction to end the hold print function is received, the controller 11 ends the folder display processing and ends the series of processes related to the hold print function (step S290; Yes -> step S300). Upon determining that the instruction to end the hold print function is not received, the controller 11 continues the processing related to the hold print function (step S290; No -> step S280).

Upon determining in step S220 that the display position of the miscellaneous folder is not set within the first display area, the controller 11 determines the display position of the miscellaneous folder to be the second display area which is an area outside the first display area (the display area of the user folder), and moves the processing to step S250 (step S220; No -> step S310 -> step S250).

When the controller 11 determines that the display position of the miscellaneous folder is not fixed to the end position of the user folder in step S230, the controller 11 determines the display position of the miscellaneous folder to be a predetermined display position in the first display area, and moves the processing to step S250 (step S230; Yes -> step S320 -> step S250). Note that the display position (predetermined display position) of the miscellaneous folder in the first display area can be set to any display position, and may be, for example, the top position or the center position of the user folder.

### 1.4.3 Example of Processing Related to Hold Print Function

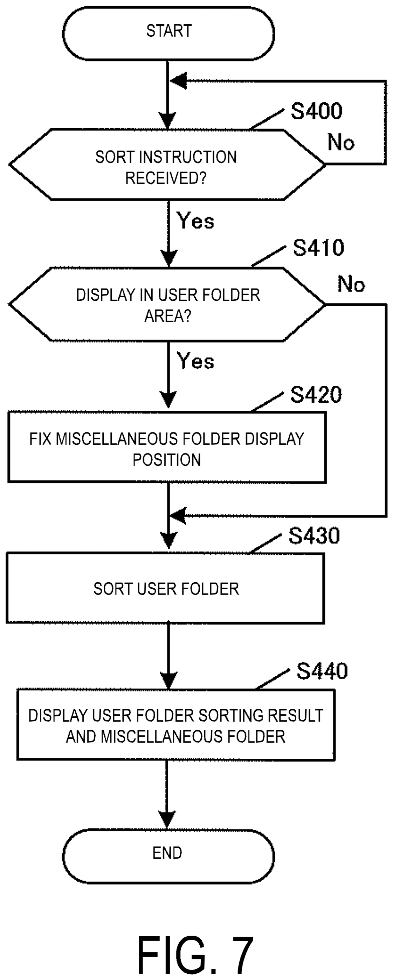

Next, as an example of processing related to the hold print function, folder sort processing will be described with reference to a flowchart in FIG. 7. Note that the processing described with reference to FIG. 7 will be described as processing executed by the controller 11 receiving an instruction to start the hold print function and reading the control program 231, the display control program 232, the job program 233 (hold print program 2331), and the like.

The controller 11 determines whether a folder sort instruction from the user is received (step S400). Upon determining that the sort instruction from the user is received, the controller 11 determines whether the display position of the miscellaneous folder is set within the first display area that is the display area for the user folder (step S400; Yes -> step S410). Upon determining that the sort instruction from the user is not received, the controller 11 waits until the sort instruction from the user is received (step S400; No).

Upon determining that the display position of the miscellaneous folder is set within the first display area which is the display area for the user folder, the controller 11 sets the miscellaneous folder to be excluded from the target of the sort processing and fixes the display position thereof (step S410; Yes -> step S420). Upon determining that the display position of the miscellaneous folder is not set in the first display area, that is, upon determining that the display position of the miscellaneous folder is in the second display area, the controller 11 skips the processing in step S420 and moves the processing to step S430 (step S410; No -> step S430).

Then, the controller 11 changes the display position of the user folder by performing the sort processing of the user folder existing in the first display area based on a sorting rule such as the update date and time of the user folder, the order of the character type related to the folder name, or the order of the execution date and time of the job, in response to the sorting instruction for the user folder received in step S400 (step S430) for example. Finally, the controller 11 displays the sort processing result for the user folder and the miscellaneous folder, and ends the processing (step S440).

### 1.5 Operation Examples

Next, an operational example according to the first embodiment will be described.

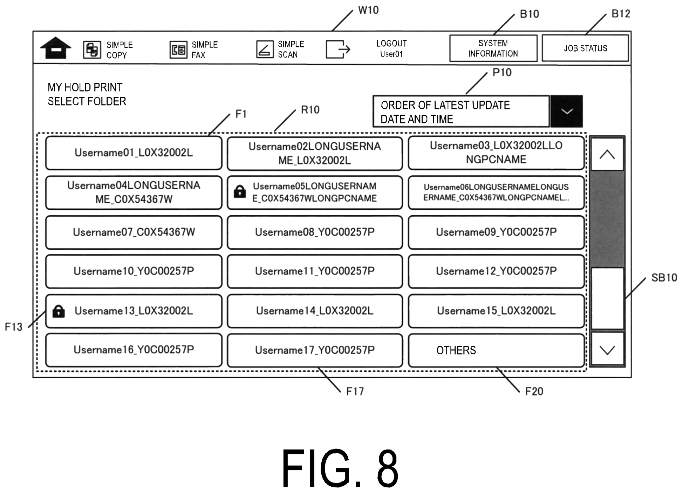

FIG. 8 is a diagram illustrating an example of a display configuration of a print hold screen W10 according to the first embodiment. The print hold screen W10 in FIG. 8 is an example of a case where the display position of the miscellaneous folder is fixed to the end position of the user folder in the first display area (corresponding to the processing in step S240 in FIG. 6).

The print hold screen W10 includes a first display area R10, a pull-down menu P10, a system information button B10, a job status button B12, and a scroll bar SB10.

The first display area R10 is a substantially rectangular display area for displaying user folders (F1, ..., F13, ..., F17) and a miscellaneous folder F20. Note that, for convenience of description with reference to the drawings, only some of the user folders (F1, ..., F13, ..., F17) illustrated as an example in FIG. 8 are denoted by reference numerals, and when the user folders (F1, ..., F13, ..., F17) are not distinguished from each other, they are simply referred to as a user folder Fn.

The user folder Fn illustrated as an example in FIG. 8 is an example of a folder name (identifier) in which the user name 1031 and the computer name 1033 are connected by an underscore (_). For example, in this example, a folder name "Username01_L0X32002L" is added to the user folder F1, and a folder name "Username17_Y0C00257P" is added to the user folder F17 displayed at the end position. That is, for example, the user folder F1 is indicated to be the user folder Fn storing print data owned by a user identified by the user name 1031 "Username01 " and the computer name 1033 "L0X32002L". In addition to the folder name, a lock mark (icon) or the like for restricting editing, browsing, or the like of the print data in the user folder, as in the user folder F13, may be displayed in the user folder Fn.

The miscellaneous folder F20 illustrated as an example in FIG. 8 is a folder that does not satisfy the condition for storage in the user folder Fn and stores print data determined not to be stored in the user folder Fn. The controller 11 displays the miscellaneous folder F20 in the first display area R10 regardless of the presence or absence of the print data to be stored. An example of how the print data is stored in the miscellaneous folder F20 will be described below.

The pull-down menu P10 is a pull-down menu for receiving a selection instruction for the sort rule of the user folder Fn in the first display area R10. FIG. 8 illustrates a case where "order of latest update date and time" is selected as the sort rule. Upon receiving a selection instruction for the sort rule from the user using the pull-down menu P10, the controller 11 executes the sort processing for the user folders Fn in the first display area R10 based on the selected sort rule.

The system information button B10 is a selection button for receiving an instruction to display a system information screen in which the device information of the multifunction peripheral 10 and notification information related to the multifunction peripheral 10 are aggregated. When the selection instruction for the system information button B10 is received from the user, the controller 11 displays the system information screen (not illustrated). The job status button B12 is a selection button for receiving an instruction to display a status screen indicating a job execution status by the multifunction peripheral 10. When the selection instruction for the job status button B12 is received from the user, the controller 11 displays the job status screen (not illustrated).

The scroll bar SB10 indicates the current display position of the first display area R10, and is used to change the display position of the first display area R10 in accordance with the vertical movement of the bar formed in a band shape. FIG. 8 illustrates a case where the scroll bar SB10 is located at a display position where the end position (user folder F17) of the user folder Fn and the miscellaneous folder F20 are displayed in the first display area R10.

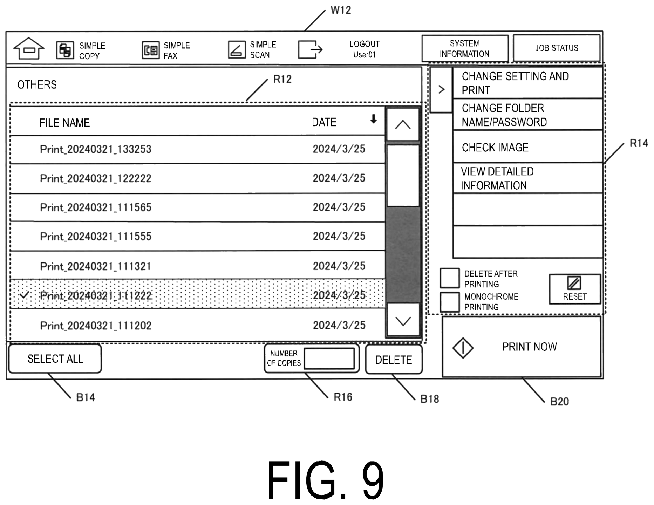

FIG. 9 illustrates an example of a display configuration of a print data display screen W12 displayed by the controller 11 upon receiving the selection instruction for the miscellaneous folder F20 illustrated in FIG. 8.

The print data display screen W12 includes a print data display area R12, an operation selection area R14, a "select all" button B14, a number-of-copies input area 16, a "delete" button B18, and a "print now" button B20.

The print data display area R12 is a display area for displaying, in a list format, the print data stored in the miscellaneous folder F20. FIG. 9 illustrates an example in which seven pieces of print data "Print_20240321_133253" to "Print_20240321_111202" are displayed in the order of storage in the miscellaneous folder F20 (descending order) as the print data stored in the miscellaneous folder F20. The print data display area R12 is configured to enable selection of print data to be executed as a print job, and FIG. 9 illustrates a case where print data "Print_20240321_111222" is selected by the user. As illustrated in FIG. 9, the selected print data can be expressed using a check mark indicating that the print data is selected or by a display color indicating each print data different from the display color of the other non-selected print data.

The operation selection area R14 is an area for receiving selection of an operation instruction for each print data displayed in the print data display area R12. FIG. 9 illustrates an example in which it is possible to input as the operation instruction, a selection instruction such as "change setting and print" for displaying a screen for receiving a change in print setting of the print data selected by the user, "change folder name/password" for receiving a change in folder name or a setting/change of a password, "check image" for displaying a screen for displaying a preview image of the print data selected by the user, or "view detailed information" for displaying a screen for displaying detailed information (such as a file name, a folder name in which a file is stored ("miscellaneous" in the case of miscellaneous folder), and print setting at the time of file storage) related to the print data selected by the user. In addition, in the operation selection area R14, a "delete after printing" checkbox for receiving a deletion instruction for the print data after the execution of the print job related to the print data, a "monochrome printing" checkbox for receiving an instruction to print in monochrome, a cancel button (reset button) for receiving an instruction to cancel the selection instruction in the operation selection area R14, and the like may be also displayed.

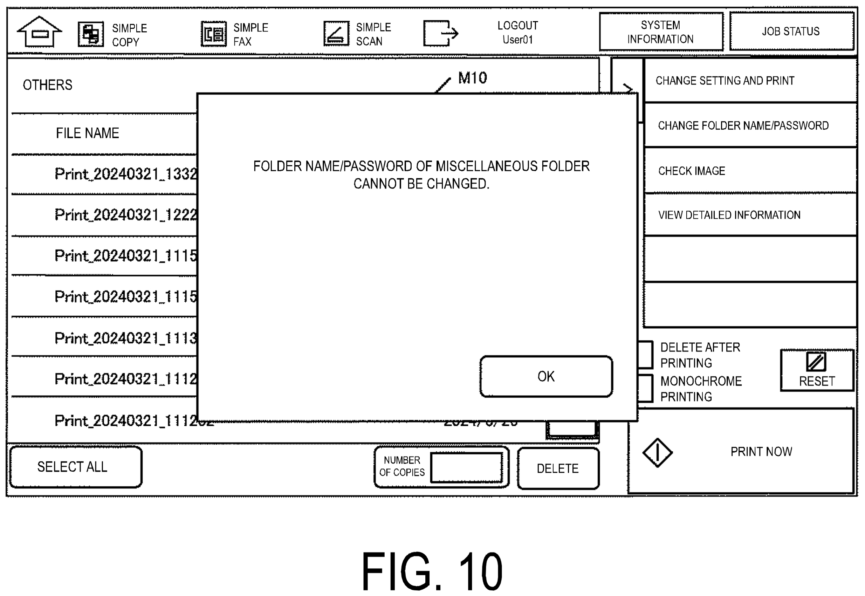

If the miscellaneous folder F20 is configured such that the authority information such as the folder name and the password can be changed based on an operation instruction from a specific user, the use of the miscellaneous folder by another user is affected, and the print data not satisfying the condition for storage in the user folder will have nowhere to go. The print data that is not stored in the appropriate storage destination may be deleted from the multifunction peripheral 10 (the storage 23) as print data of an unknown owner, and the usability for the user who has transmitted the print data is expected to be compromised. Therefore, the operation instruction "change folder name/password" is displayed in a dark color indicating that the folder name/password cannot be selected on the print data display screen W12 related to the miscellaneous folder F20, or the display itself is restricted, or, for example, a message (warning) screen M10 is preferably displayed indicating that a change in the folder name/password of the miscellaneous folder F20 is restricted (prohibited), when the selection as in the example in FIG. 10 has been made.

The "select all" button B14 is a selection button for receiving an instruction to select all the pieces of print data stored in the miscellaneous folder F20. The number-of-copies input area R16 is an input area for receiving an input of the number of copies of the selected print data. Here, when a selection instruction (for example, a touch operation) by the user is received, the number-of-copies input area R16 displays a numerical pad with which a numerical value input can be received. The number-of-copies input area R16 is grayed out when no print data is selected, and a warning sound is emitted even when the selection instruction is received from the user, and reception of operation from the user is rejected. On the other hand, after the print data is selected, the gray-out is canceled, and the active state is achieved in which an operation by the user can be received. Further, in the number-of-copies input area R16, the value of [number of copies] is displayed blank until the number of copies is changed using the numerical pad. The changed value of [number of copies] is maintained even when the selected print data is changed, but when the selection of the print data is canceled, the display returns to the gray-out display again. The "delete" button B18 is a selection button for receiving a deletion instruction for the print data selected.

The "print now" button B20 is a selection button for receiving a print execution instruction for the print data selected. When the number of copies is input to the number-of-copies input area R16 as appropriate and the selection instruction for the "print now" button B20 is received for the print data selected by the user, the controller 11 executes printing based on the print data. As in an example illustrated in FIG. 4, in a case where the setting value related to the number of copies to be printed is associated with the job information area 101, when the selection instruction for the "print now" button B20 is received without the number of copies to be printed being input to the number-of-copies input area R16, printing is executed based on the number of copies to be printed associated with the job information area 101. When the number of copies is changed in the number-of-copies input area R16, printing is executed based on the changed number of copies.

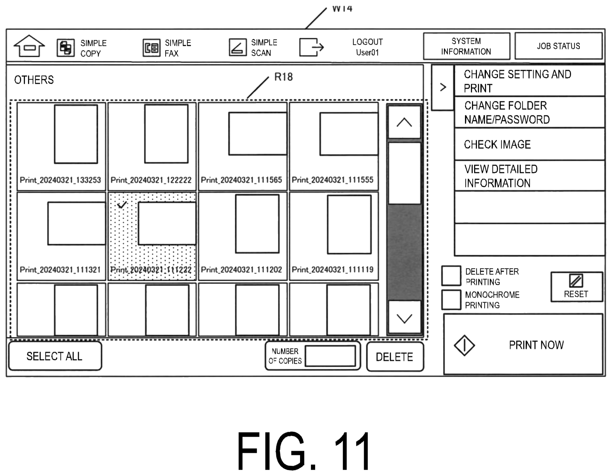

The print data stored in the miscellaneous folder F20 can be displayed in a thumbnail format different from the list format illustrated as an example in FIG. 9. FIG. 11 illustrates an example of a print data display screen W14 in the print data display area R18, in which the print data stored in the miscellaneous folder F20 is displayed in a thumbnail format. The configuration of the print data display screen W14 other than the print data display area R18 may be identical to the configuration of the print data display screen W12, and thus the description thereof is omitted herein.

By displaying the print data displayed in the miscellaneous folder F20 in a thumbnail format, the user can visually recognize the print content before printing the print data.

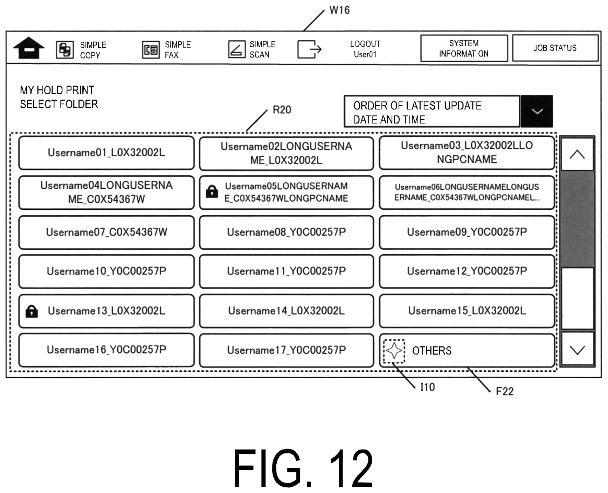

FIG. 12 is a diagram illustrating a print hold screen W16 for displaying the miscellaneous folder F20 described in FIG. 8 in an identifiable manner, and is an operation example corresponding to the processing related to step S250; Yes -> step S260 in FIG. 6. The description of the configuration already described with reference to FIG. 8 will be omitted.

FIG. 12 illustrates an example in which an identification icon I10 indicating that the folder is the miscellaneous folder is added to a miscellaneous folder F22 displayed in a first display area R20. The identification icon I10 is not limited to the example (star shape) in FIG. 12 as long as it can express the miscellaneous folder F22 to be identifiable from the user folder Fn.

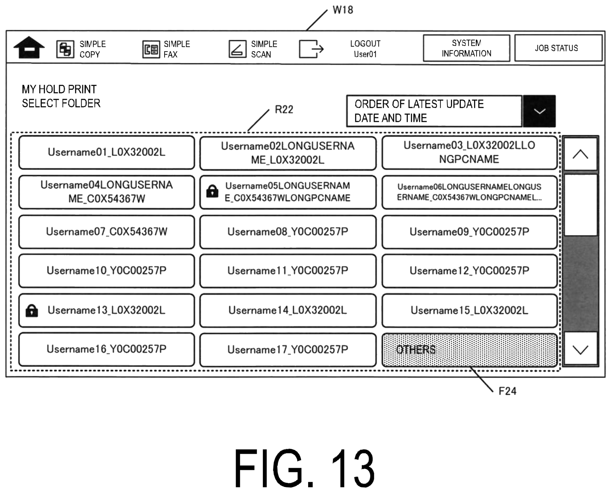

Similarly, FIG. 13 is a diagram illustrating a print hold screen W18 for displaying the miscellaneous folder F20 described in FIG. 8 in an identifiable manner, and is an operation example corresponding to the processing related to step S250; Yes -> step S260 in FIG. 6. The description of the configuration already described with reference to FIG. 8 will be omitted.

FIG. 13 illustrates an example in which a miscellaneous folder F24 displayed in a first display area R22 is displayed in a display color different from that of the user folder Fn. Note that, while the miscellaneous folder F24 is expressed in a display color different from that of the user folder Fn in the example in FIG. 13, as long as the miscellaneous folder F24 can be expressed to be identifiable from the user folder Fn, for example, the display color, the display font type, and the font size related to the display of "miscellaneous", the shape and size of the display frame (column) expressing the miscellaneous folder F24, and the like can be different from those of the user folder Fn.

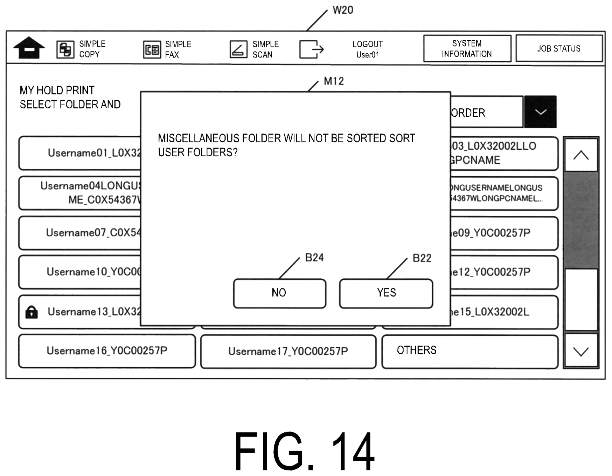

FIG. 14 is a diagram illustrating an operation example corresponding to a process related to the hold print function described with reference to FIG. 7. As described with reference to FIG. 7 and the like, when the display position of the miscellaneous folder is set in the first display area which is the user folder display area, the miscellaneous folder is not subjected to the sort processing as the change instruction for the display position. FIG. 14 is a diagram illustrating a screen configuration of a message screen M12 displayed on a print hold screen W20 when a folder sort instruction is received as a hold print function from the user.

The message screen M12 illustrated as an example in FIG. 14 includes a message indicating that the miscellaneous folder will not be sorted "Miscellaneous folder is not to be sorted. Do you want to sort user folders? " and a "Yes" button B22 and a "No" button B24.

The "Yes" button B22 is a selection button for receiving an execution instruction for the sort processing for folders (user folders). The "No" button B24 is a selection button for receiving an instruction to cancel the sort processing for the folders (user folders). The user can input an execution instruction or a cancel instruction for the sort processing for the folders (user folders) by selecting either one of the selection buttons, that is, the "Yes" button B22 or the "No" button B24 after checking the message content displayed on the message screen M12. When the execution instruction for the sort processing is received, the controller 11 executes the sort processing for the user folder. On the other hand, when the instruction to cancel the sort processing is received, the controller 11 cancels the sort processing.

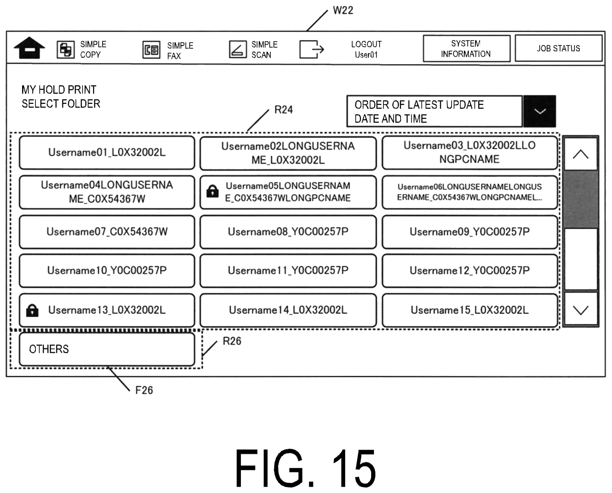

Next, the print hold screen W22 illustrated in FIG. 15 is an example in a case where the display position of the miscellaneous folder is the second display area as an area outside the first display area (the display area for the user folder), and is an operation example corresponding to the processing related to step S220; No -> step S310 in FIG. 6. The description of the configuration already described with reference to FIG. 8 will be omitted.

A print hold screen W22 illustrated as an example in FIG. 15 is an example in which a second display area R26 for displaying a miscellaneous folder F26 is provided in an external area below a first display area R24.

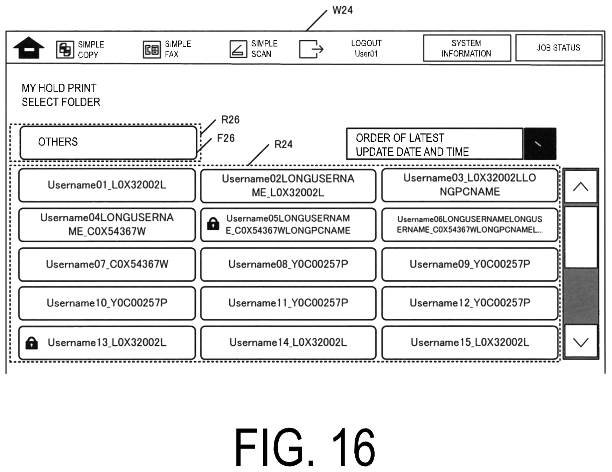

Similarly, a print hold screen W24 illustrated in FIG. 16 is an example in a case where the display position of the miscellaneous folder is the second display area as an area outside the first display area (the display area for the user folder), and is an operation example corresponding to the processing related to step S220; No -> step S310 in FIG. 6. The description of the configuration already described with reference to FIG. 8 will be omitted.

The print hold screen W24 illustrated as an example in FIG. 16 is an example in which the second display area R26 for displaying the miscellaneous folder F26 is provided in an external area above the first display area R24.

The second display area R26 illustrated as an example in FIGS. 15 and 16 is provided in a fixed area the display position of which is fixed in a lower portion or an upper portion outside a scroll area of the first display area R24. The controller 11 constantly displays the miscellaneous folder F26 in the second display area R26, regardless of whether there is print data to be stored. When there is no print data to be stored in the user folder displayed in the first display area R24, the user folder can be hidden.

A configuration enabling the miscellaneous folder to be deleted from the miscellaneous folder storage area 235 based on the deletion instruction from a specific user may affect the use of the miscellaneous folder by other users, and the print data not satisfying the condition for storage in the user folder may have nowhere to go. The print data that is not stored in the appropriate storage destination may be deleted from the multifunction peripheral 10 (the storage 23) as print data of an unknown owner, and the usability for the user who has transmitted the print data is expected to be compromised. Therefore, it is preferable that deletion of the miscellaneous folder from the miscellaneous folder storage area 235 is prohibited and reception of the deletion instruction from the user is also restricted.

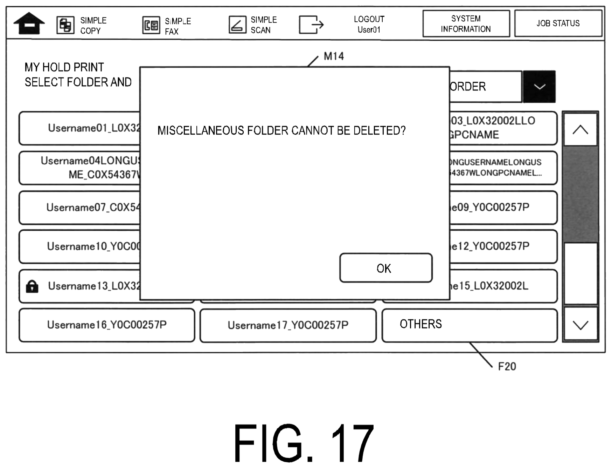

FIG. 17 is an example of a display configuration of a message screen M14 displayed by the controller 11 when the deletion instruction for the miscellaneous folder is received from the user. When the deletion instruction for the miscellaneous folder F20 is received, the message screen M14 displays a message "Miscellaneous folder cannot be deleted", indicating that the miscellaneous folder F20 cannot be deleted to the user. The controller 11 makes the user check the display content on the message screen M14, so that he or she can recognize that the miscellaneous folder F20 is configured to be deletable.

As described above, according to the first embodiment, by providing the miscellaneous folder, it is possible to secure a save destination for print data that does not satisfy the condition for storage in the user folder. By setting restriction (prohibition) requirements such as unchangeability and undeletability of the folder name/password for the miscellaneous folder, the usability for the user who has transmitted the print data can be guaranteed. Further, since the miscellaneous folder can be displayed to be identifiable from the user folder or can be excluded from the sorting target, the user who cannot recognize the storage destination of the print data can easily figure out the location of the print data transmitted by the user by referring to the miscellaneous folder.

### 2 Second Embodiment

A second embodiment relates to a mode in which when the number of created user folders reaches the upper limit number of user folders that can be created, the print data stored in the user folder to be deleted is saved in the miscellaneous folder.

### 2.1 Functional Configuration

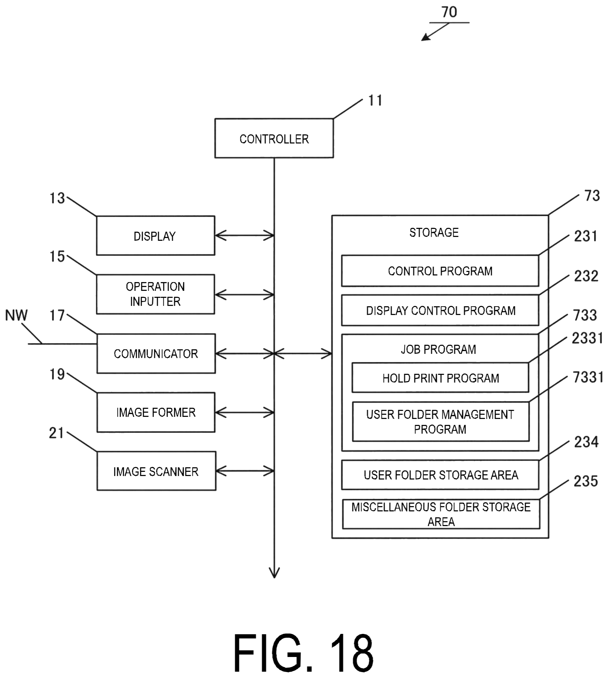

FIG. 18 is a functional block diagram of a multifunction peripheral 70 according to the second embodiment. Further, parts of the multifunction peripheral 70 according to the second embodiment that can be configured in the same way as those in the multifunction peripheral 10 according to the first embodiment are denoted by the same reference signs, and description thereof will be omitted.

The multifunction peripheral 70 includes a storage 73 instead of the storage 23 according to the first embodiment. The storage 73 according to the second embodiment stores a control program 231, a display control program 232, and a job program 733, and secures a user folder storage area 234 and a miscellaneous folder storage area 235.

The job program 733 includes a user folder management program 7331 in addition to the hold print program 2331. The user folder management program 7331 is a program read by the controller 11 when managing the user folder stored in the user folder storage area 234. The controller 11 reads the user folder management program 7331 to comprehensively manage the created user folders. For example, when the number of created user folders reaches the upper limit number that can be managed (that can be stored in the user folder storage area 234), the controller 11 executes deletion processing for a relevant user folder based on a predetermined deletion condition. The predetermined deletion condition is not particularly limited, but for example, a deletion condition may be provided with which a user folder having the oldest folder creation date and time is preferentially set as the deletion target, or a user folder in which print data is not stored and update is delayed for a predetermined period is preferentially set as the deletion target. In addition, a user folder in which the number of pieces of print data stored in each user folder reaches a predetermined storage number may be preferentially set as the deletion target.

The controller 11 that has read the hold print program 2331 moves the print data stored in the user folder selected as the deletion target by the user folder management program 7331 to the miscellaneous folder. In this case, the controller 11 may be configured to notify the user corresponding to the user folder or the administrator of the multifunction peripheral 10 of a fact that the user folder to be deleted has been deleted and the print data stored in the user folder has been moved to the miscellaneous folder.

### 2.2 Flow of Processing

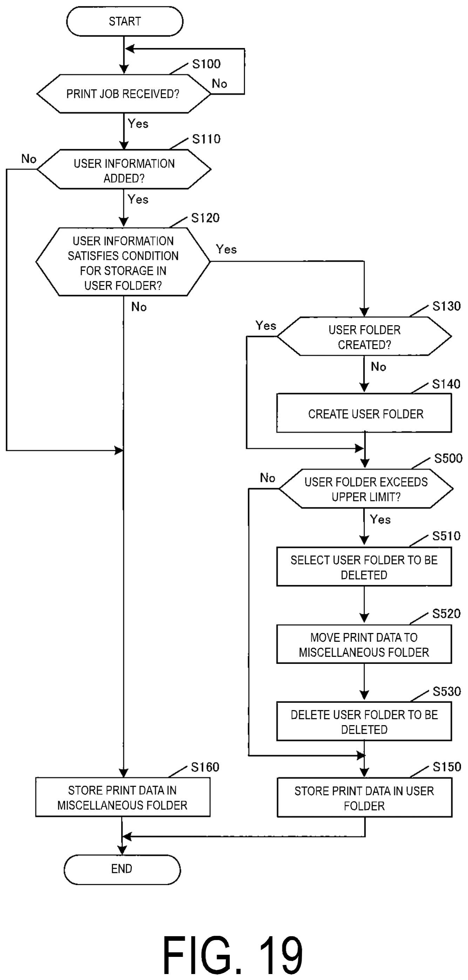

Next, a flow of processing according to the second embodiment will be described. FIG. 19 is a flowchart illustrating a flow of processing from reception of a print job to storage of print data in the user folder or the miscellaneous folder. Note that the processing described with reference to FIG. 19 will be described as processing executed by the controller 11 reading the control program 231, the job program 733 (the hold print program 2331 and the user folder management program 7331), and the like.

The processing described with reference to FIG. 19 can be implemented by providing processing related to step S140 to step S150 between the processing related to step S500 and the processing related to step S530 described with reference to the flowchart in FIG. 5 according to the first embodiment. Therefore, description of processing other than steps S500 to S530 is omitted.

In step S140, after creating the user folder, the controller 11 determines whether the number of created user folders exceeds the upper limit number (step S140 -> step S500). Upon determining that the number of created user folders exceeds the upper limit number, the controller 11 selects a user folder to be deleted (step S500; Yes -> step S510).

Next, the controller 11 moves the print data stored in the user folder selected as the deletion target to the miscellaneous folder (step S520). Then, the controller 11 deletes the user folder, for which the movement of the print data to the miscellaneous folder has been completed, from the user folder storage area 234, and moves the processing to step S150 (step S530 -> step S150).

On the other hand, when the controller 11 determines in step S500 that the number of created user folders does not exceed the upper limit number, the controller 11 skips the processing related to steps S510 to S530 and moves the processing to step S150 (step S500; No→ step S150).

As described above, according to the second embodiment, in addition to the effects of the first embodiment, the print data stored in the user folder to be deleted can be moved (saved) to the miscellaneous folder. As a result, according to the second embodiment, it is possible to prevent the print data stored in the user folder to be deleted from being lost unnecessarily. The user related to the user folder to be deleted can collect (save) the deleted print data from the miscellaneous folder, and thus it is possible to suppress a loss due to the deletion of the user folder.

The disclosure is not limited to the embodiments described above and can be modified in various ways. That is, embodiments obtained by appropriately combining technical means within the scope not departing from the gist of the disclosure are also included within the technical scope of the disclosure. Configurations of the disclosure sought to be patented are set forth in the appended claims, but configurations not recited in the claims are not intended to be excluded from the technical scope.

In the above-described specification, the descriptions "in a case in which ..." and "when ..." are described as examples, and the configuration is not limited to the described contents. Configurations not indicated by the descriptions "in a case in which ..." and "when ..." are also disclosed to the extent that the configurations are obvious to those skilled in the art, and the rights thereof are intended to be acquired.

The processing and the flow of data have been described herein in order, but the order thereof is not limited to the described order. For example, a configuration in which processing is partly removed or the order is rearranged is also disclosed, and the right thereof is intended to be acquired.

Further, although the above-described embodiments are described separately for convenience of description, it is obvious that the embodiments may be executed in combination within a technically possible scope.

Further, in the embodiments, a program operating on each device is a program that controls a CPU or the like (a program for causing a computer to function) to realize the functions of the above-described embodiments. Information handled by such a device is temporarily stored in a temporary storage device (for example, a RAM) during the processing and then stored in various storage devices such as read only memories (ROMs) and HDDs, and is read, modified, and written by the CPU as necessary.

Here, a computer-readable non-transitory recording medium on which a program is recorded in an information processing device may be any of a semiconductor medium (for example, a ROM or a non-volatile memory card), an optical recording medium/magnetic optical recording medium (for example, a digital versatile disc (DVD), magneto optical disc (MO), mini disc (MD), compact disc (CD), or Blu-ray (BD; registered trademark) disc)), a magnetic recording medium (for example, a magnetic tape or flexible disk), and the like. In this case, the program recorded on the recording medium is read by the computer of the information processing device and executed by the computer, such that not only the functions of the above-described embodiment are enabled, but also functions of the disclosure are enabled by performing processing in cooperation with an operating system, another application program, or the like based on instructions of the program.

Further, when a program is distributed in a market, the program can be stored in a portable recording medium and distributed, or can be transferred to a server computer connected via a network such as the Internet. In this case, it is obvious that a storage device of the server computer is also included in the disclosure.

Further, each functional block or feature of the device used in the above-described embodiment can also be implemented and executed by an electric circuit, such as an integrated circuit or a plurality of integrated circuits for example. An electric circuit designed to implement the function described herein may include a general-purpose processor, a digital signal processor (DSP), an application specific integrated circuit (ASIC), a field programmable gate array (FPGA) or other programmable logic devices, discrete gate or transistor logic, discrete hardware components, or a combination thereof. The general-purpose processor may be a microprocessor or may be a known processor, controller, microcontroller, or state machine. The electric circuit described above may include a digital circuit or may include an analog circuit. Further, when an integrated circuit technology for replacement into a current integrated circuit emerges with the development of semiconductor technology, a new integrated circuit based on the technology may also be used in one or more aspects of the disclosure.

## Claims

1. An image forming apparatus (10) comprising:
one or more controllers (11); and
a storage (23) that is a storage destination of print data, wherein
the one or more controllers (11)
store the print data in a first folder when user information added to the print data satisfies a condition for storage in the first folder identified by an identifier including the user information, and
store the print data in a second folder different from the first folder when the user information does not satisfy the condition for storage in the first folder.

2. The image forming apparatus (10) according to claim 1, wherein, when the print data is to be stored in the first folder and the first folder is not generated, the one or more controllers (11) newly generate the first folder based on the user information added to the print data, and store the print data in the first folder generated.

3. The image forming apparatus (10) according to claim 1, wherein, when the user information added to the print data does not include information related to a predetermined information type set in advance, the one or more controllers (11) determine that the user information does not satisfy the condition for storage in the first folder.

4. The image forming apparatus (10) according to claim 3, wherein the information related to the predetermined information type includes a user name of an owner of the print data.

5. The image forming apparatus (10) according to claim 1, further comprising a display that displays the first folder and the second folder in a predetermined display area.

6. The image forming apparatus (10) according to claim 5, wherein the one or more controllers (11) display the first folder as a list in a first display area in which a display position of the first folder is changeable based on an operation instruction from the user.

7. The image forming apparatus (10) according to claim 6, wherein the one or more controllers (11) display the second folder in the first display area.

8. The image forming apparatus (10) according to claim 7, wherein the one or more controllers (11) fix, when displaying the second folder in the first display area, a display position of the second folder at an end position of the first folder.

9. The image forming apparatus (10) according to claim 7, wherein the one or more controllers (11) display, when displaying the second folder in the first display area, the second folder to be identifiable from the first folder.

10. The image forming apparatus (10) according to claim 7, wherein the one or more controllers (11) restrict, when a change instruction for the display position of the first folder in the first display area is received, a change in a display position of the second folder.

11. The image forming apparatus (10) according to claim 6, wherein the one or more controllers (11) display the second folder in a second display area different from the first display area.

12. The image forming apparatus (10) according to claim 5, wherein the one or more controllers (11) display the second folder on the display, even when the print data to be stored in the second folder does not exist.

13. The image forming apparatus (10) according to claim 1, wherein the one or more controllers (11) restrict reception of a deletion instruction for the second folder.

14. The image forming apparatus (10) according to claim 1, wherein the one or more controllers (11) restrict reception of a change instruction for the identifier for the second folder and a change instruction for authority information related to management of the second folder.

15. A control method for an image forming apparatus (10) including one or more controllers (11), and a storage (23) that stores print data, the control method comprising:
storing the print data in a first folder when user information added to the print data satisfies a condition for storage in the first folder identified by an identifier including the user information; and
storing the print data in a second folder different from the first folder when the user information does not satisfy the condition for storage in the first folder.
